# FASCICULE DE BREVET EUROPEEN

(11) **EP 3 785 783 B1**
(45) Date de publication et mention de la délivrance du brevet: **10.08.2022**
(21) Numéro de dépôt: 20192341.4
(22) Date de dépôt: 24.08.2020
(51) Int. Cl.: B01D 3/00, B01D 3/20, B01D 3/32

(54) **COLONNE DE SÉPARATION GAZ/LIQUIDE CONTENANT UN DISPOSITIF DE DISTRIBUTION**
GAS-/FLÜSSIGKEITSTRENNSÄULE, DIE EINE AUSGABEVORRICHTUNG ENTHÄLT
COLUMN FOR SEPARATING GAS/LIQUID CONTAINING A DISTRIBUTION DEVICE

(30) Priorité: 02.09.2019 FR 1909613
(43) Date de publication de la demande: 03.03.2021
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: DAVIDIAN, Benoit, 94503 CHAMPIGNY SUR MARNE (FR); WATTIAU, Mikael, 78350 LES LOGES EN JOSAS (FR)
(74) Mandataire: Air Liquide

(56) Documents cités:
- EP-A1- 2 653 203
- EP-A1- 3 034 142
- EP-A2- 0 879 626

## Description

Le domaine de la présente invention concerne les colonnes de séparation gaz/liquide, et plus particulièrement les dispositifs de distribution destinés à équiper de telles colonnes.

Les colonnes de séparation gaz/liquide sont connues depuis de nombreuses années et permettent par exemple de réaliser une séparation de différents éléments chimiques entrant dans la composition d'un fluide homogène, par exemple par distillation ou par absorption.

Ces colonnes comprennent classiquement plusieurs organes de contact qui permettent de mettre en contact une phase liquide et une phase gazeuse du fluide contenant les éléments à séparer. Entre deux organes de contact successifs, ces colonnes peuvent comprendre un collecteur qui collecte le liquide issu d'un premier organe de contact pour le diriger vers un dispositif de distribution qui est quant à lui configuré pour diriger le liquide vers un second organe de contact et le répartir de façon homogène sur ce deuxième organe de contact. Dans le même temps, ce collecteur et ce dispositif de distribution sont aptes à laisser passer le gaz qui quitte le second organe de contact vers le premier organe de contact. Toutefois, le liquide qui quitte le premier organe de contact peut présenter des compositions légèrement différentes, plus précisément en termes de proportion des éléments qui composent ce liquide, selon l'endroit où le liquide sort du premier organe de contact à l'autre. Il peut donc être nécessaire de re-mélanger ce liquide afin que sa composition soit totalement homogène et que, par la suite, la répartition sur le deuxième organe de contact le soit également. Les dispositifs de distribution intègrent ainsi de plus en plus de systèmes de collecte du liquide et de mélange du liquide ainsi collecté. Des contraintes économiques imposent toutefois des limites aux dimensions de ces colonnes.

Par ailleurs, le mélange du liquide en sortie de l'organe de contact reste généralement unidirectionnel, et donc incomplet. La présente invention vise à pallier cet inconvénient en proposant un dispositif de distribution du liquide apte à collecter du liquide et à permettre un mélange de ce liquide selon au moins deux directions distinctes. EP 0879626 A2 décrit une colonne selon le préambule de la revendication 1.

EP2653202 A1 et EP3034142 A1 décrivent des colonnes selon l'art antérieur.

Un objet de la présente invention concerne ainsi une colonne de séparation gaz /liquide selon la revendication 1.

Le dispositif de distribution est configuré pour que le liquide quittant les gouttières formées par les moyens d'obturation se déverse dans les goulottes. Selon l'invention, au moins un moyen d'obturation comprend une première extrémité longitudinale ouverte et une deuxième extrémité longitudinale fermée, de manière à forcer le liquide à sortir de la gouttière par la première extrémité longitudinale ouverte.

On entend par «délimitée transversalement», le fait que chaque goulotte est «délimitée le long d'un axe transversal», c'est-à-dire un axe perpendiculaire à l'axe longitudinal et à l'axe vertical. En d'autres termes, les cheminées sont empilées les unes après les autres le long de cet axe transversal, une goulotte étant interposée entre deux cheminées successives.

On comprend que le liquide ne peut quitter le dispositif de distribution que par les orifices ménagés dans la plaque inférieure de ce dispositif de distribution. Ces orifices étant ménagés au moins en partie dans le fond des goulottes, on comprend que le liquide reçu dans les gouttières formées par les moyens d'obturation doit être dirigé vers ces goulottes afin de pouvoir quitter le dispositif de distribution par les orifices. En tout état de cause, le liquide doit être dirigé vers les goulottes afin de rejoindre la plaque inférieure dans laquelle sont ménagés tous les orifices.

Avantageusement, la présente invention permet, par un moyen simple et peu coûteux, de réaliser un mélange de ce liquide au cours de son acheminement vers ces goulottes. On comprend en effet qu'en modulant quelles extrémités des moyens d'obturation sont ouvertes ou fermées, on permet un mélange transversal du liquide en permettant de faire quitter le liquide des gouttières d'un côté ou de l'autre du dispositif de distribution. Avantageusement, les moyens d'obturation, agencés pour éviter que le liquide pénètre dans les cheminées par lesquelles remontent le gaz, permettent donc de collecter le liquide, de le guider vers telle ou telle zone de la plaque supérieure puis vers la plaque inférieure, via les gouttières appropriées.

Il convient de noter que la totalité du liquide passe par les goulottes pour rejoindre la plaque inférieure mais seule une portion de ce liquide, en l'espèce la deuxième portion, est directement collectée par ces goulottes, c'est-à-dire sans passer par les moyens d'obturation agencés sur les cheminées.

Chaque goulotte a pour fond la plaque inférieure.

Le distributeur permet de déverser le liquide directement collecté par les goulottes dans la colonne en passant par le canal périphérique supérieur.

Tel que mentionné, ces cheminées sont en outre configurés pour autoriser un passage du gaz à travers le dispositif de distribution. En d'autres termes, cela signifie que la plaque inférieure du dispositif de distribution présente des découpes ménagées en regard de ces cheminées. De même, pour que le gaz puisse quitter ces cheminées, au moins une ouverture est ménagée latéralement dans une paroi délimitant la cheminée, au voisinage de l'extrémité verticale de la cheminée concerné et du moyen d'obturation qui bouche cette extrémité verticale. Par exemple ces ouvertures peuvent être réalisées par des trous de forme oblongue percés dans la paroi de chaque cheminée.

Selon une caractéristique de l'invention, le dispositif de distribution comprend au moins un canal périphérique supérieur ménagé entre les extrémités longitudinales de chaque moyen d'obturation et un bord périphérique du dispositif de distribution, cet au moins un canal périphérique supérieur étant configuré pour d'une part collecter directement une troisième portion du liquide amené à traverser le dispositif de distribution et d'autre part pour permettre la circulation de la première portion de liquide en sortie des moyens d'obturation vers les goulottes.

Selon une caractéristique de l'invention, la première portion du liquide collectée par les moyens d'obturation agencés sur les cheminées cumulées à la troisième portion du liquide collectée par l'au moins un canal périphérique supérieur est d'une quantité supérieure à celle de la deuxième portion de ce liquide collectée directement par les goulottes.

En d'autres termes, les moyens d'obturation et l'au moins un canal périphérique supérieur s'étendent de sorte qu'au niveau de la plaque supérieure, la surface globale d'extension des moyens d'obturation cumulée à la surface globale d'extension de l'au moins un canal périphérique supérieur est supérieure à la surface globale d'extension des goulottes.

Notamment, il peut être prévu que la surface globale d'extension des moyens d'obturation au niveau de la plaque supérieure cumulée à la surface globale d'extension de l'au moins un canal périphérique supérieur corresponde à au moins 40% de la surface globale de cette plaque supérieure. En d'autres termes, dans ce cas, environ 40% du liquide descendant amené à traverser le dispositif de distribution est collecté directement au niveau de la plaque inférieure, dans le fond des goulottes. Ainsi, on s'assure qu'une part conséquente du liquide est remélangée, de sorte que le liquide qui quitte le dispositif de distribution présente une composition homogène.

Selon un premier exemple de réalisation de la présente invention, chaque plaque supérieure comporte deux portions de plaque supérieure agencées de part et d'autre d'un axe transversal dans le premier plan, chaque portion de plaque supérieure comprend une première partie transversale et une deuxième partie transversale, la première partie transversale de la première portion de plaque supérieure étant agencée dans le prolongement de la première partie transversale de la deuxième portion de plaque supérieure. Selon ce premier exemple de réalisation, un premier ensemble des extrémités longitudinales ouvertes des moyens d'obturation est agencé dans la première partie transversale de l'une des portions de plaque supérieure et un deuxième ensemble de ces extrémités longitudinales ouvertes des moyens d'obturation est agencé dans la deuxième partie transversale de l'autre portion de plaque supérieure. Avantageusement, le premier ensemble et le deuxième ensemble des extrémités longitudinales ouvertes des moyens d'obturation peuvent correspondre, respectivement, à la moitié de ces extrémités longitudinales ouvertes. On comprend donc que le liquide quittant les cheminées au niveau de la première partie transversale de l'une des portions de plaque supérieure rejoint la plaque inférieure par une goulotte ménagée dans la deuxième partie transversale de cette portion de plaque supérieure.

Avantageusement, cela permet un mélange horizontal, c'est-à-dire le long de l'axe transversal, suffisant et homogène du liquide qui traverse le dispositif de distribution.

Selon un deuxième exemple de réalisation de la présente invention, chaque plaque supérieure comporte deux portions de plaque supérieure agencées de part et d'autre d'un axe transversal dans le premier plan, chaque portion de plaque supérieure comprend une première partie d'extrémité transversale, une partie centrale et une deuxième partie d'extrémité transversale, la partie centrale de chaque portion de plaque supérieure étant agencée entre les deux parties d'extrémité transversale de la portion de plaque supérieure concernée, la première partie d'extrémité transversale, la partie centrale et la deuxième partie d'extrémité transversale de la première portion de plaque supérieure étant agencées dans le prolongement, respectivement, de la première partie d'extrémité transversale, de la partie centrale et de la deuxième partie d'extrémité transversale de la deuxième portion de plaque supérieure.

Selon ce deuxième exemple de réalisation, l'ensemble des extrémités longitudinales ouvertes des moyens d'obturation débouchant dans une même portion de plaque supérieure est réparti dans l'une et l'autre des parties d'extrémité transversale de cette même portion de plaque supérieure et l'ensemble des extrémités longitudinales ouvertes des moyens d'obturation débouchant dans l'autre portion de plaque supérieure est agencé dans la partie centrale de cette autre portion de plaque supérieure. Autrement dit, le liquide quittant les cheminées débouchant dans les parties d'extrémité transversale de l'une des portions de plaque supérieure rejoint la plaque inférieure par une goulotte ménagée dans la partie centrale de cette portion de plaque supérieure. De la même manière, le liquide quittant les cheminées débouchant dans la partie centrale de l'une des portions de plaque supérieure rejoint la plaque inférieure par une goulotte ménagée dans l'une des parties d'extrémité transversale de cette portion de plaque supérieure.

Tel que précédemment mentionné, seule une portion du liquide passe par les cheminées. On comprend donc que, quel que soit le mode de réalisation sélectionné, la présente invention permet avantageusement de mélanger cette première portion du liquide et la troisième portion du liquide directement collectée par l'au moins un canal périphérique supérieur avec la deuxième portion du liquide directement collectée par les goulottes, assurant ainsi un mélange transversal complet et homogène du liquide avant que celui-ci ne quitte le dispositif de distribution.

Selon une caractéristique de la présente invention chaque goulotte, délimitée transversalement par au moins une cheminée, comprend une première extrémité longitudinale ouverte et une deuxième extrémité longitudinale fermée. Selon cette caractéristique, on comprend qu'il est alors possible de diriger le liquide collecté par les moyens d'obturation vers des zones de la plaque inférieure de façon plus précise, et donc d'améliorer encore le re-mélange transversal de ce liquide. En effet, le liquide qui quitte l'un de ces moyens d'obturation devra circuler au moins jusqu'à rencontrer une extrémité longitudinale ouverte de l'une des goulottes afin de rejoindre la plaque inférieure et de pouvoir quitter le dispositif de distribution. Par exemple, la première extrémité longitudinale ouverte de chaque goulotte comprend une paroi dans laquelle est ménagée une rainure par laquelle le liquide est apte à rejoindre la goulotte concernée. Avantageusement, cette rainure s'étend principalement selon une direction parallèle à l'axe vertical.

Selon une caractéristique de la présente invention, les moyens d'obturation des cheminées forment des gouttières présentant un profil approprié pour l'écoulement du liquide collecté. Par exemple, ces gouttières peuvent présenter un profil en V, en U ou en W, étant entendu que toute autre forme permettant de collecter la première portion du liquide est envisageable sans sortir du contexte de l'invention. Selon l'invention, au moins un organe de mélange peut être agencé dans chaque goulotte. Par exemple, cet au moins un organe de mélange peut prendre la forme d'une rampe que le liquide, ou au moins la deuxième portion de ce liquide, est contraint d'emprunter pour rejoindre la plaque inférieure et donc pour quitter le dispositif de distribution selon l'invention. Avantageusement, chaque goulotte comprend deux rampes s'étendant respectivement depuis l'une des extrémités longitudinales de la goulotte concernée. Ces rampes fonctionnent alors comme de petits organes de collecte qui permettent avantageusement un mélange du liquide selon la direction longitudinale. En d'autres termes, l'ouverture d'une extrémité longitudinale sur deux des moyens d'obturation des cheminées permet un mélange transversal du liquide tandis que ces organes de mélange agencés dans les goulottes permettent un mélange longitudinal de ce liquide. Ainsi, la présente invention permet un mélange bidirectionnel, suffisant et homogène du liquide qui permet de favoriser au maximum les échanges à venir entre ce liquide et le gaz circulant dans la colonne dans laquelle le dispositif de distribution est destiné à être intégré.

La présente invention concerne également une colonne de séparation gaz/liquide qui comprend au moins un dispositif de distribution selon l'invention, cet au moins un dispositif de distribution étant agencé en amont d'un organe de contact entre le liquide et le gaz selon un premier sens de circulation du liquide à travers la colonne.

Selon la présente invention, la colonne peut comprendre un premier organe de contact agencé en amont du dispositif de distribution selon l'invention, l'organe de contact agencé en aval de ce dispositif de distribution selon le premier sens de circulation du liquide à travers la colonne étant alors un deuxième organe de contact.

Selon une caractéristique de l'invention, au moins une poutre support peut être positionnée sur au moins deux moyens d'obturation des cheminées du dispositif de distribution, cette au moins une poutre support étant configurée pour supporter le premier organe de contact agencé en amont du dispositif de distribution selon le premier sens de circulation du liquide à travers la colonne. On entend par « positionnée sur au moins deux moyens d'obturation des cheminées » le fait que cette au moins une poutre support s'étend principalement selon l'axe transversal. Autrement dit, la colonne comprend, dans cet ordre selon un sens de circulation du liquide à travers la colonne, le premier organe de contact entre le liquide et le gaz, l'au moins une poutre support sur laquelle est agencé ce premier organe de contact, le dispositif de distribution selon l'invention sur lequel est agencée l'au moins une poutre support et le deuxième organe de contact. De plus, cette au moins une poutre support est configurée pour qu'une fois en position entre l'organe de contact et le dispositif de distribution, elle favorise la circulation du gaz et améliore par conséquent la répartition du gaz sur l'organe de contact. Optionnellement, le premier organe de contact peut être supporté par une pluralité de poutres support.

D'autres détails, caractéristiques et avantages ressortiront plus clairement à la lecture de la description détaillée donnée ci-après à titre indicatif en relation avec les différents exemples de réalisation illustrés sur les figures suivantes :
**[****Fig. 1****]** illustre schématiquement une partie supérieure d'une colonne de séparation gaz/liquide selon la présente invention ;
**[****Fig. 2****]** est une vue en perspective d'un dispositif de distribution selon un premier exemple de réalisation de la présente invention, ce dispositif de distribution étant destiné à être intégré dans la colonne de séparation gaz/liquide représentée sur la figure 1 ;
**[****Fig. 3****]** illustre schématiquement, vue de dessus, le dispositif de distribution selon, respectivement, le premier exemple de réalisation illustré sur la figure 2 et un deuxième exemple de réalisation de la présente invention ;
**[****Fig. 4****]** illustre schématiquement, vue de dessus, le dispositif de distribution selon, respectivement, le premier exemple de réalisation illustré sur la figure 2 et un deuxième exemple de réalisation de la présente invention ;
**[****Fig. 5****]** illustre, en perspective, une variante de réalisation du dispositif de distribution selon la présente invention.

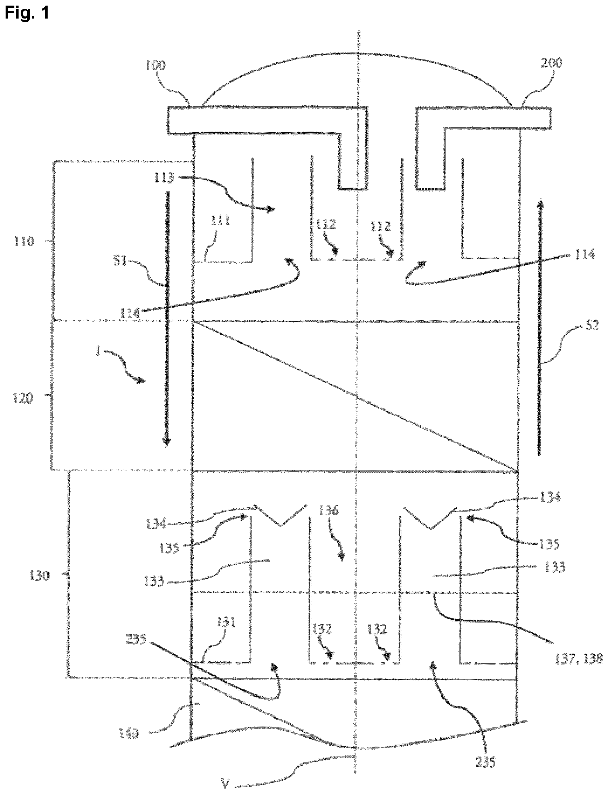

Sur la figure 1 est représentée, de façon schématique, une partie supérieure d'une colonne 1 de mise en contact d'un gaz et d'un liquide selon la présente invention. Cette colonne 1 s'étend principalement selon un axe vertical V et peut par exemple présenter une section circulaire. Une telle colonne 1 comprend au moins une arrivée 100 de liquide et une arrivée de gaz - non illustrée ici - ainsi qu'une sortie de liquide - non représentée ici - et une sortie de gaz 200. Selon un exemple illustré ici, l'arrivée 100 de liquide et la sortie de gaz 200 prennent la forme de tuyaux.

Le liquide circule à travers la colonne 1 selon un premier sens de circulation S1 descendant et le gaz circule quant à lui à travers la colonne 1 selon un deuxième sens de circulation S2 montant, opposé au premier sens S1. On comprend donc qu'une sortie de liquide et une entrée de gaz sont agencées dans une portion inférieure de la colonne 1 non illustrée ici. Dans la suite de la description les termes « amont », « aval », « dessus », « dessous », « entrée », et « sortie » se réfèrent au premier sens de circulation S1 descendant du liquide à travers la colonne 1.

Ainsi, selon le premier sens de circulation S1 du liquide à travers la colonne 1, celle-ci comprend un premier dispositif de distribution 110 configuré pour collecter le liquide qui entre dans la colonne 1 par l'arrivée 100 de liquide et pour le répartir sur toute une surface, ici une surface supérieure, d'un premier organe de contact 120. Le liquide qui ressort de ce premier organe de contact 120 est ensuite collecté par un deuxième dispositif 130 de distribution conforme à la présente invention. Plus particulièrement, et tel que cela sera plus amplement détaillé ci-après, ce deuxième dispositif 130 de distribution diffère du premier dispositif de distribution 110 en ce qu'il permet un mélange du liquide collecté avant de le répartir sur toute une surface d'un deuxième organe de contact 140, ce deuxième organe de contact 140 n'étant que partiellement représenté sur la figure 1. Chacun des dispositifs de distribution 110, 130 comprend au moins une plaque 111, 131 dans laquelle sont ménagés des orifices 112, 132 par lesquels le liquide est apte à quitter le dispositif 110, 130 de distribution concerné. Tel qu'illustré, des cheminées 113, 133 émergent de cette plaque 111, 131 et s'étendent parallèlement à l'axe vertical V lorsque le dispositif de distribution est disposé dans la colonne de séparation. Selon l'invention, ces cheminées 113, 133 sont configurés pour être empruntés par le gaz selon le deuxième sens de circulation S2. A cette fin, les plaques 111, 131 de ces dispositifs 110, 130 de distribution comprennent, chacune, une pluralité de découpes 114, 235, agencées en regard de chacun de ces cheminées 133. Autrement dit, chaque plaque 111, 131 comprend autant de découpes 114, 235 que le dispositif 110, 130 de distribution concerné comprend de cheminées 113, 133.

Le deuxième dispositif 130 de distribution diffère du premier dispositif de distribution 110, notamment par la présence de moyens d'obturation 134 agencés sur chaque cheminée 133, à une extrémité de celui-ci. Ces moyens d'obturation 134 sont, entre autres, configurés pour empêcher le liquide qui quitte le premier organe de contact 120 de s'introduire dans les cheminées 133 du deuxième dispositif 130 de distribution et de perturber la remontée de gaz via ces cheminées 133.

Des ouvertures 135 sont ménagées entre chaque moyen d'obturation 134 et la cheminée 133 sur lequel il est agencé de sorte à permettre au gaz circulant dans ces cheminées 133 de quitter ce deuxième dispositif 130 de distribution afin de rejoindre le premier organe de contact 120. Par exemple ces ouvertures 135 peuvent être réalisées par des trous percés dans une région supérieure de chaque cheminée 133, sous le moyen d'obturation 134 correspondant.

Tel que cela sera plus amplement détaillé ci-après, ces moyens d'obturation 134 présentent une forme de gouttière configurée pour collecter une première portion du liquide issu du premier organe de contact 120. On remarque par ailleurs que deux cheminées 133 successifs délimitent entre eux une goulotte 136 configurée pour collecter directement une deuxième portion du liquide issu du premier organe de contact 120. Il doit être compris que la figure 1 est schématique et que le deuxième dispositif 130 de distribution peut comprendre en fonction de sa dimension et par exemple de son diamètre une pluralité de cheminées 133 ainsi qu'une pluralité de goulottes 134.

Le dispositif de distribution selon l'invention comporte des moyens de communication entre les moyens d'obturation ménagés sur les cheminées et les goulottes de manière à ce que, tel que cela sera décrit ci-dessous, la première portion du liquide collectée par les moyens d'obturation 134 soit acheminée vers l'une des goulottes 136 du deuxième dispositif 130 de distribution afin de pouvoir quitter ce dernier.

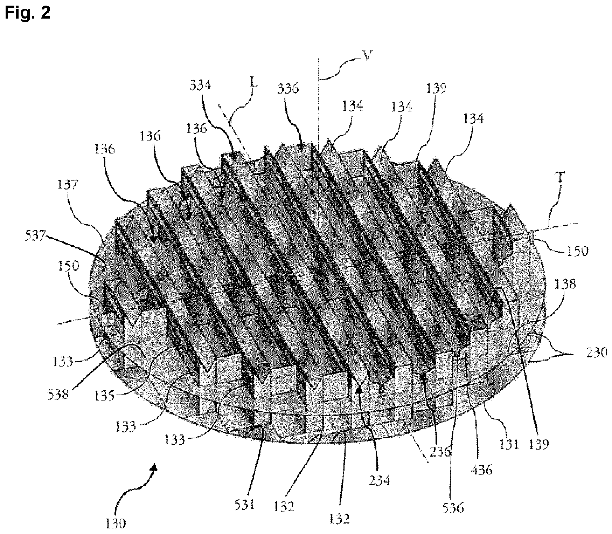

Ainsi, une fois le liquide entré dans la colonne 1 par l'arrivée 100, le liquide est réparti, notamment grâce au premier dispositif de distribution 110 sur toute une surface du premier organe de contact 120 au niveau duquel il est alors en contact avec le gaz présent dans la colonne 1. Un échange de chaleur et/ou de matière a alors lieu entre ce gaz et ce liquide dans ce premier organe de contact 120. Le gaz remonte la colonne de séparation et quitte alors le premier organe de contact 120 pour rejoindre la sortie 200 de gaz en passant par les cheminées 113 du premier dispositif de distribution 110. En sortie de colonne 1, ce gaz est pur et il peut alors être condensé puis conditionné pour une utilisation future. Dans le même temps, le liquide coule en descendant le long de la colonne de séparation et quitte le premier organe de contact 120 pour se diriger vers le deuxième dispositif 130 de distribution. Tel que mentionné ci-dessus, une première portion de ce liquide est alors collectée par les moyens d'obturation 134 agencés au sommet des cheminées 133 de ce deuxième dispositif 130 de distribution et une deuxième portion de ce liquide est quant à elle collectée directement par les goulottes 136 ménagées entre ces cheminées 133. Tel que cela sera plus amplement détaillé ci-après en référence à la figure 2, le deuxième dispositif 130 de distribution comprend en outre au moins un canal périphérique supérieur 537, 538 configuré pour collecter directement une troisième portion du liquide amené à traverser le dispositif de distribution, ainsi que pour permettre l'écoulement de la première portion de liquide directement collecté par les moyens d'obturation 134 depuis une extrémité longitudinale ouverte de ces moyens d'obturation vers les goulottes 136.

Avantageusement, le deuxième dispositif 130 de distribution présente une forme de disque délimité par un bord périphérique 230 et dimensionné pour s'adapter parfaitement à la section circulaire de la colonne 1. Les goulottes 136 et les cheminées 133 sont agencés en série, parallèlement les uns aux autres et en alternance, de manière à s'étendre sur toute la surface du disque. De la sorte, la totalité du liquide passant à travers le deuxième dispositif 130 de distribution, entre le premier organe de contact 120 et le deuxième organe de contact 140, pénètre dans ce deuxième dispositif de distribution soit par les goulottes soit par les cheminées soit par l'au moins un canal périphérique 537, 538.

En référence aux figures 2 à 5, nous allons maintenant décrire plus en détails l'agencement et le fonctionnement du deuxième dispositif 130 de distribution réalisé selon la présente invention.

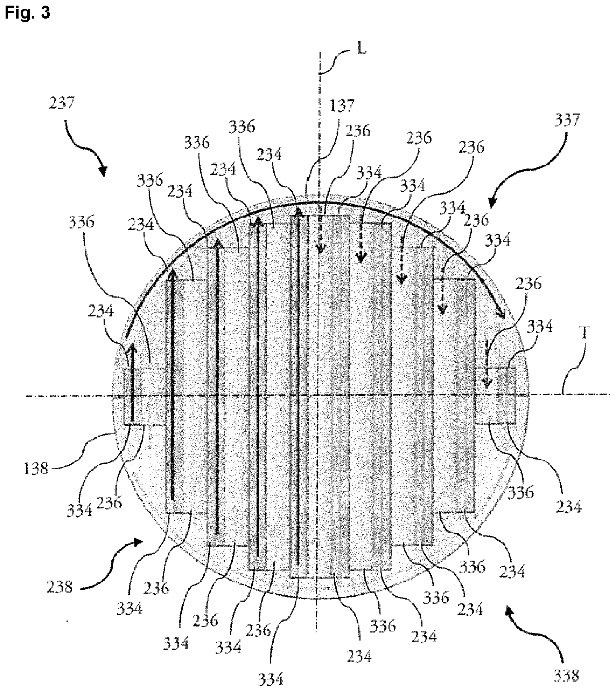

Les figures 2 et 3 illustrent le dispositif 130 de distribution selon un premier exemple de réalisation de la présente invention.

La figure 2 est une vue en perspective du dispositif 130 de distribution selon l'invention. Tel que mentionné ci-dessus, le dispositif 130 de distribution selon l'invention comprend deux étages de plaques superposées axialement le long de l'axe vertical V, avec une plaque 131, dite ici plaque inférieure, dans laquelle sont ménagés plusieurs orifices 132 par lesquels le liquide est apte à quitter le dispositif 130 de distribution, et une plaque supérieure 137, 138, représentée en pointillés sur la vue en coupe de la figure 1. Le dispositif 130 de distribution comprend en outre les cheminées 133 qui émergent de la plaque inférieure 131 et s'étendent parallèlement à l'axe vertical V au-delà de la plaque supérieure 137, 138. On comprend que la dénomination de plaques inférieure et supérieure est conforme à leur disposition selon l'orientation du dispositif 130 de distribution lorsqu'il est intégré à une colonne, tel qu'illustré sur la figure 1.

La plaque inférieure 131 s'inscrit principalement dans un premier plan et la plaque supérieure 137, 138 s'inscrit quant à elle dans un deuxième plan parallèle au premier plan et distinct de ce dernier. La plaque supérieure comporte deux portions symétriques 137, 138 agencées de part et d'autre d'un axe de symétrie transversal T. Dans l'exemple illustré, une fois que le dispositif 130 de distribution est en position dans la colonne, ces plaques inférieure 131 et supérieure 137, 138 s'étendent au contact de la paroi de cette colonne, de manière à former des réceptacles étanches en périphérie du dispositif et dans lesquels le liquide est apte à circuler. Plus précisément c'est le bord périphérique 230 de ces plaques 131, 137, 138 qui est agencé au contact de la paroi de la colonne. Cet agencement présente l'avantage de se passer d'une plaque périphérique additionnelle pour la fermeture des réceptacles. On comprendra que sans sortir du contexte de l'invention, le bord périphérique 230 des plaques pourraient être prolongé par un bord relevé qui viendrait contre la paroi de la colonne permettant de réaliser cette étanchéité.

La plaque inférieure 131 a une forme circulaire et la plaque supérieure 137, 138 a une forme substantiellement annulaire.

Les cheminées 133 s'étendent verticalement depuis la plaque inférieure 131 et au-delà de chacune des plaques supérieures 137, 138 et longitudinalement, c'est-à-dire selon un axe longitudinal L perpendiculaire à l'axe vertical V, sur les deux portions symétriques de la plaque supérieure 137, 138. En d'autres termes, chaque cheminée 133 s'étend de manière continue à la fois sur une première portion de la plaque supérieure 137 et sur une deuxième portion de la plaque supérieure 138. Tel que mentionné ci-dessus, le dispositif 130 de distribution selon l'invention comprend également une pluralité de goulottes 136, chaque goulotte 136 étant délimitée transversalement, c'est-à-dire le long de l'axe transversal T perpendiculaire à l'axe vertical V et à l'axe longitudinal L, par deux =cheminées 133. Tel que représenté, un premier canal périphérique supérieur 537 et un deuxième canal périphérique supérieur 538 sont respectivement ménagés sur la première portion de la plaque supérieure 137 et sur la deuxième portion de cette plaque supérieure 138 entre les extrémités longitudinales des cheminées 133 et le bord périphérique 230 du dispositif de distribution 130. Le dispositif de distribution 130 selon l'invention comprend en outre un canal périphérique inférieur 531 ménagé sur la plaque inférieur 131, entre les extrémités longitudinales des cheminées 133 et le bord périphérique 230 du dispositif de distribution 130. En d'autres termes, lorsque le dispositif de distribution 130 est positionné dans une colonne, ces canaux périphériques supérieurs 537, 538 et inférieur 531 sont ménagés entre les extrémités longitudinales des cheminées 133 et la paroi de la colonne.

Sur la plaque inférieure 131, les orifices 132 par lesquels le liquide est apte à quitter le dispositif 130 de distribution sont ménagés d'une part entre les cheminées 133 qui émergent de la plaque inférieure 131, c'est-à-dire dans le fond des goulottes 136, et d'autre part dans le canal périphérique inférieur 531. Autrement dit, pour pouvoir quitter le dispositif 130 de distribution, le liquide doit passer par au moins l'une de ces goulottes 136 ou par le canal périphérique inférieur 531.

Les moyens d'obturation 134 tels que décrits précédemment sont disposés respectivement sur chacun des cheminées 133, chaque moyen d'obturation 134 étant agencé à une extrémité verticale supérieure du cheminée 133 concerné. Chaque moyen d'obturation 134 est configuré pour d'une part empêcher le liquide de pénétrer dans ces cheminées 133 et pour d'autre part collecter ce liquide, et plus précisément la première portion de ce liquide tel que précédemment évoqué. A cette fin, ces moyens d'obturation 134 présentent, chacun, une forme de gouttière. Selon l'exemple illustré ici, ces gouttières présentent plus particulièrement un profil en V. Il est entendu que ces gouttières pourraient également présenter un profil en U ou un profil de toute autre forme sans sortir du contexte de la présente invention à condition que cette autre forme permette de collecter la première portion du liquide et la guider vers au moins l'une des gouttières. Avantageusement, des ouvertures 135 sont ménagées entre chaque moyen d'obturation 134 et le cheminée 133 sur lequel il est agencé de sorte à permettre au gaz circulant dans ces cheminées 133 de quitter ce dispositif 130 de distribution et de continuer sa remontée le long de la colonne de séparation gaz/liquide. Selon l'exemple illustré sur la figure 2, ces ouvertures 135 prennent la forme de fentes, chacune de ces fentes s'étendant sur toute une dimension longitudinale du cheminée 133 dans lequel elle est ménagée.

Une paroi 150 est avantageusement disposée à chaque extrémité transversale de la plaque supérieure, c'est-à-dire à la jonction des première et deuxième portions de la plaque supérieure 137, 138, entre le bord périphérique 230 du dispositif 130 de distribution et le cheminée 133 le plus proche de cette extrémité transversale. De la sorte, la première portion de plaque supérieure 137 et la deuxième portion de plaque supérieure 138 sont étanches l'une par rapport à l'autre. Plus précisément, cette paroi 150 est positionnée à la jonction du premier canal périphérique supérieur 537 et du deuxième canal périphérique supérieur 538 : le liquide tombant sur le dispositif de distribution directement sur l'un ou l'autre de ces canaux périphériques supérieurs 537, 538 peut ainsi courir le long de la première portion, respectivement la deuxième portion, de la plaque supérieure sans passer dans la deuxième portion, respectivement la première portion.

On remarque également sur cette figure 2 que deux rampes 139 sont agencées dans chaque goulotte 136. Selon une variante de réalisation non illustrée ici, un nombre différent de rampes, et par exemple une seule, pourrait être agencé dans chaque goulotte 136 sans sortir du contexte de l'invention, dès lors qu'un espace est ménagé entre les rampes ou à l'extrémité longitudinale d'une des rampes pour laisser passer le liquide coulant le long de ces rampes vers la plaque inférieure 131. Tel qu'illustré, ces rampes 139 s'étendent respectivement depuis l'une ou l'autre des extrémités longitudinales de la goulotte 136 concernée.

Ces rampes 139 sont des organes de mélange qui permettent de mélanger la deuxième portion de liquide directement collectée par les goulottes 136 selon une direction longitudinale, en dirigeant cette deuxième portion de liquide vers le ou les passage(s) ménagé(s) entre les rampes. Une partie de cette deuxième portion du liquide tombe sur ces rampes 139 qui modifient ainsi le trajet emprunté par cette partie de la deuxième portion du liquide et permettent alors un mélange de cette deuxième portion du liquide selon la direction longitudinale.

Chaque moyen d'obturation 134 présente une première extrémité longitudinale ouverte 234 et une deuxième extrémité longitudinale fermée 334, ces deux extrémités longitudinales 234, 334 étant opposées l'une à l'autre le long de l'axe longitudinal L. En d'autres termes, le liquide collecté par l'un de ces moyens d'obturation 134 ne peut quitter ce moyen d'obturation 134 que par l'une des extrémités longitudinales de ce moyen d'obturation 134, à savoir la première extrémité longitudinale ouverte 234. En fonction de l'orientation du moyen d'obturation, c'est-à-dire selon que l'extrémité longitudinale ouverte débouche sur le premier canal périphérique supérieur 537 ou sur le deuxième canal périphérique supérieur 538, le liquide collecté dans ce moyen d'obturation ne peut rejoindre que la première portion de plaque supérieure 137 ou que la deuxième portion de plaque supérieure 138.

Par ailleurs, chaque goulotte 136 présente, au niveau de la plaque supérieure 137, 138, une extrémité longitudinale ouverte 236 et une extrémité longitudinale fermée 336. En revanche, les extrémités longitudinales des goulottes sont toutes les deux ouvertes entre la plaque supérieure 137, 138 et la plaque inférieure 131. En d'autres termes, chaque goulotte comprend deux extrémités longitudinales inférieures ouvertes, ces extrémités longitudinales inférieures débouchant entre la plaque supérieure 137, 138 et la plaque inférieure 131, une extrémité longitudinale supérieure ouverte 236 et une extrémité longitudinale supérieure fermée 336, ces extrémités longitudinales supérieures 236, 336 s'étendant dans l'un ou l'autre des canaux périphériques supérieurs 537, 538. Pour faciliter la compréhension de l'exposé qui va suivre, les extrémités longitudinales supérieure ouvertes 236 ou fermées 336 sont désignées simplement comme « extrémités longitudinales ouvertes 236 » ou « extrémité longitudinales fermées 336 ».

Ainsi, chaque goulotte 136 est fermée à chacune de ces extrémités longitudinales 236, 336 par une paroi 436, et les extrémités longitudinales sont dites ouvertes lorsqu'une rainure 536 est ménagée dans cette paroi et sont dites fermées lorsque les parois sont pleines, sans rainures.

Les rainures 536 sont de la sorte configurées pour être empruntées par le liquide circulant le long de la plaque supérieure de sorte que ce liquide puisse rejoindre la goulotte 136 concernée. Selon l'exemple illustré ici, les rainures 536 s'étendent selon l'axe vertical.

Les parois 436 des goulottes 136 dans lesquelles sont formées les rainures 536 peuvent présenter des hauteurs différentes, ajustables en fonction du débit du liquide amené à circuler dans la colonne de séparation de sorte que chaque goulotte 136 reçoive la même quantité de liquide que les autres goulottes. Ces hauteurs sont mesurées parallèlement à l'axe vertical V.

En fonction de l'orientation de la goulotte, c'est-à-dire selon que l'extrémité longitudinale ouverte débouche sur la première portion de la plaque supérieure ou sur la deuxième portion de la plaque supérieure, le liquide pénétrant dans cette goulotte ne peut provenir que de la première portion de plaque supérieure 137 ou de la deuxième portion de plaque supérieure 138. En d'autres termes, les extrémités longitudinales ouvertes 236 des goulottes 136 débouchant uniquement dans l'une ou l'autre des portions de plaque supérieure 137, 138, on comprend que le liquide circulant sur cette plaque supérieure 137, 138 ne peut rejoindre la plaque inférieure 131 et donc les orifices 132 lui permettant de quitter le dispositif 130 de distribution que par certaines goulottes 136.

Il résulte de ce qui précède qu'en modulant l'ouverture et la fermeture des extrémités longitudinales des moyens d'obturation 134 et des goulottes 136, on parvient à diriger le liquide traversant le dispositif de distribution, depuis la plaque supérieure vers la plaque inférieure 131, en le redistribuant d'un côté du dispositif, par rapport à l'axe transversal T, vers l'autre côté au cours de cette traversée. Cette redistribution se fait notamment via le guidage des moyens d'obturation 134 et les ouvertures ménagées dans les goulottes. La première portion du liquide est ainsi mélangée à la deuxième portion de ce liquide de sorte que le liquide qui quitte le dispositif 130 de distribution pour rejoindre le deuxième organe de contact est homogène, c'est-à-dire que les proportions des éléments présents dans ce liquide sont identiques, ou sensiblement identiques, en tout point du deuxième organe de contact.

Le cumul de la première portion du liquide collectée directement par les moyens d'obturation 134 et de la troisième portion du liquide collectée directement par les canaux périphériques supérieurs 537, 538 est supérieur à la deuxième portion de ce liquide collectée directement par les goulottes 136. Par exemple, la deuxième portion représente 40% de la totalité du liquide qui traverse le deuxième dispositif 130 de distribution.

Selon un exemple de réalisation non illustré ici, toutes les extrémités longitudinales des goulottes peuvent être ouvertes. La répartition du liquide le long de l'axe transversal est alors rendue aléatoire mais la répartition longitudinale, entre la première et la deuxième portion de plaque supérieure reste efficace.

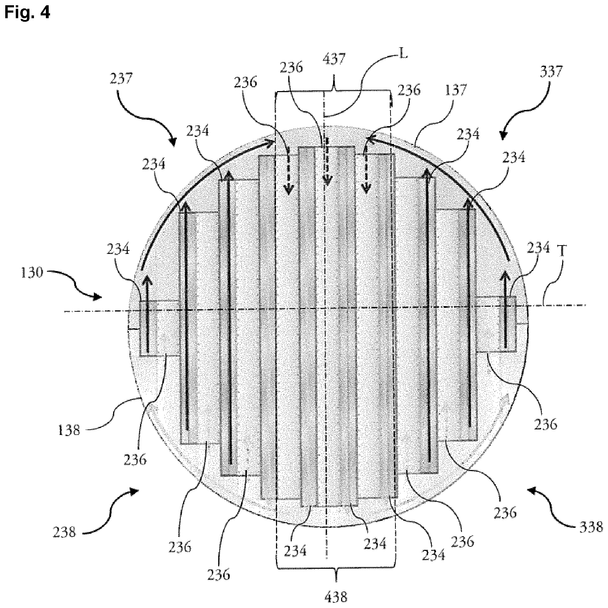

Les figures 3 et 4 sont des vues de dessus du dispositif 130 de distribution selon la présente invention selon, respectivement, un premier exemple de réalisation et un deuxième exemple de réalisation. Ces exemples de réalisation diffèrent dans le positionnement des extrémités longitudinales ouvertes 234, 236 et fermées 334, 336 des moyens d'obturation 134 et des goulottes 136 et impliquent de la sorte des circulations du liquide différentes à travers le dispositif d'obturation, qui vont être présentées plus en détails ci-après.

Afin de décrire plus clairement la redistribution du liquide, on définit une répartition fonctionnelle de la plaque supérieure, d'une part par la découpe de la plaque supérieure en deux portions symétriques de part et d'autre de l'axe transversal comme précédemment décrit, et d'autre part par la découpe de chaque portion symétrique en deux parties de part et d'autre de l'axe longitudinal.

Selon le premier exemple de réalisation illustré sur la figure 3, chaque portion de plaque supérieure 137, 138 est partagée en une première partie transversale 237, 238 et une deuxième partie transversale 337, 338, agencée de part et d'autre de l'axe longitudinal L. La première partie transversale 237 de la première portion de plaque supérieure 137 est agencée dans le prolongement longitudinal de la première partie transversale 238 de la deuxième portion de plaque supérieure 138. Tel que représenté, un premier ensemble des extrémités longitudinales ouvertes 234 des moyens d'obturation 134 est agencé dans la première partie transversale 237 de la première portion de plaque supérieure 137 et un deuxième ensemble de ces extrémités longitudinales ouvertes 234 est agencé dans la deuxième partie transversale 338 de la deuxième portion de plaque supérieure 138. Simultanément, les extrémités longitudinales ouvertes 236 des goulottes 136 sont disposées sur la deuxième partie transversale 337 de la première portion de plaque supérieure 137 et sur la première partie transversale 238 de la deuxième portion de plaque supérieure 138.

Tel que cela est représenté par les flèches, le liquide qui quitte les moyens d'obturation 134 au niveau de l'une des parties transversales de l'une des portions de plaque supérieure (flèche en trait plein) ne peut rejoindre la plaque inférieure 131, et donc les orifices 132 lui permettant de quitter le dispositif 130 de distribution, que par des goulottes 136 dont l'extrémité longitudinale ouverte 236 est agencée dans l'autre partie transversale de cette même portion de plaque supérieure (flèche en trait pointillé). Ainsi, un mélange horizontal du liquide est réalisé le long de l'axe transversal T.

Selon le deuxième exemple de réalisation illustré sur la figure 4, chaque portion de plaque supérieure 137, 138, est partagée en une première partie d'extrémité transversale 237, 238, une partie centrale 437, 438 et une deuxième partie d'extrémité transversale 337, 338, chaque partie de la première portion de plaque supérieure 137 étant agencée dans le prolongement longitudinal de la partie correspondante de l'autre portion de plaque supérieure 138.

Selon ce deuxième exemple de réalisation, les extrémités longitudinales ouvertes 234 des moyens d'obturation 134 qui débouchent dans la première portion de plaque supérieure 137 débouchent plus précisément dans les parties d'extrémité transversales 237, 337 de cette première portion de plaque supérieure 137 et les extrémités longitudinales 236 ouvertes des goulottes 136 qui débouchent dans cette première portion de plaque supérieure 137 débouchent dans la partie centrale 437 de cette première portion de plaque supérieure 137. A l'inverse, pour ce qui est de la deuxième portion de plaque supérieure 138, les extrémités longitudinales ouvertes 234 des moyens d'obturation 134 qui débouchent sur cette deuxième portion de plaque supérieure 138 débouchent plus précisément dans la partie centrale 438 de cette deuxième portion de plaque supérieure 138 et les extrémités longitudinales ouvertes 236 des goulottes 136 qui débouchent dans cette deuxième portion de plaque supérieure 138 débouchent dans les parties d'extrémités transversales 238, 338 de cette deuxième plaque supérieure 138. Tel qu'illustré par les flèches sur la figure 4, le liquide qui quitte les moyens d'obturation 134 dans une partie d'extrémité transversale 237, 238, 337, 338 de l'une des portions de plaque supérieure 137, 138 (flèches en traits pleins) rejoint la plaque inférieure 131, et donc les orifices 132 qui y sont ménagés, par une goulotte 136 agencée dans la partie centrale 437, 438 de la plaque supérieure 137, 138 concernée (flèches en traits pointillés). A contrario, le liquide qui quitte les moyens d'obturation 134 dans la partie centrale 437, 438 de l'une des portions de plaque supérieure 137, 138 (flèches en traits pleins) rejoint la plaque inférieure 131 par une goulotte 136 agencée dans l'une des parties d'extrémités transversales 237, 238, 337, 338 de cette portion de plaque supérieure 137, 138 (flèches en traits pointillés).

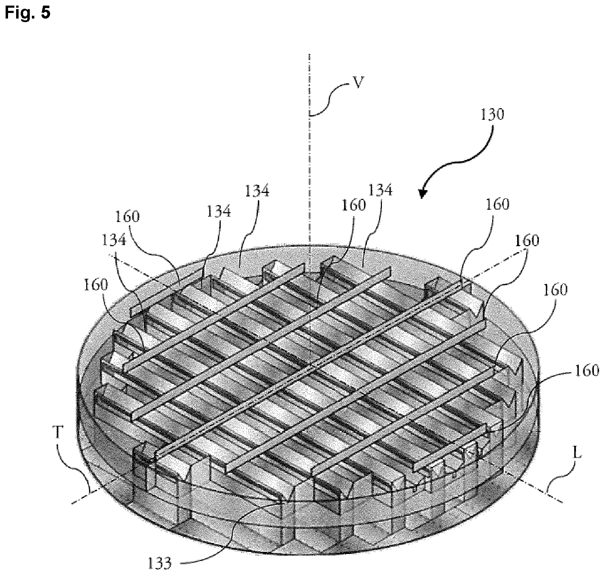

Selon l'un quelconque de ces exemples de réalisation, le dispositif 130 de distribution peut en outre comprendre au moins une poutre support 160, et avantageusement une pluralité de poutres support 160. Ces poutres support 160 sont par exemple représentées sur la figure 5. Tel qu'illustré, ces poutres support 160 sont disposées sur les moyens d'obturation 134 des cheminées 133, perpendiculairement à ces cheminées.

Les poutres support 160 s'étendent ainsi principalement selon l'axe transversal T et sont empilées les unes après les autres le long de l'axe longitudinal L. Avantageusement, ces poutres support 160 sont configurées d'une part pour supporter le premier organe de contact agencé en amont du dispositif 130 de distribution lorsque celui-ci est intégré à la colonne décrite ci-dessus, et d'autre part pour éloigner suffisamment ce premier organe de contact du dispositif 130 de distribution de sorte à assurer une circulation fluide et homogène du gaz qui quitte le dispositif 130 de distribution par les cheminées 133. On comprend en effet qu'en positionnant ce premier organe de contact directement au contact des moyens d'obturations 134, cette circulation du gaz risquerait d'être entravée, réduisant alors le rendement du premier organe de contact et donc de la colonne entière.

Le dispositif de distribution selon la présente invention propose un moyen simple et peu coûteux qui permet de collecter un liquide, de mélanger ce liquide selon au moins deux directions de sorte à le rendre totalement homogène en termes de proportions des éléments qui le constituent, et de le redistribuer de façon uniforme, par exemple vers un organe de contact d'une colonne de séparation gaz/liquide. Tel que cela vient d'être décrit à travers plusieurs exemples de réalisation, le mélange bidirectionnel est réalisé par la configuration des ouvertures à l'une ou l'autre des extrémités longitudinales des moyens d'obturation des cheminées, ainsi que le cas échéant par la configuration des ouvertures des parties supérieures des goulottes s'étendant au-delà de la plaque supérieure, ainsi que le cas échéant par la présence des rampes dans les goulottes.

## Revendications

1. Colonne de séparation gaz /liquide, comprenant un dispositif de distribution de liquide et un organe de contact gaz/liquide, adaptée pour qu'un liquide s'écoule selon un premier sens de circulation de liquide à travers le dispositif en amont de l'organe de contact gaz/liquide, le dispositif de distribution comprenant
• une pluralité de cheminées (133) s'étendant depuis une plaque inférieure (131) selon un axe vertical (V) perpendiculaire à un premier plan, chaque cheminée (133) étant configurée pour être empruntée par le gaz dans un deuxième sens (S2) de circulation opposé au premier sens (S1), les cheminées étant disposées au-dessus de découpes (235) dans la plaque inférieure,
• une pluralité de moyens d'obturation (134) agencés respectivement à une extrémité verticale supérieure de l'une des cheminées (133) et sur toute une dimension longitudinale de ladite cheminée (133), chaque moyen d'obturation (134) présentant une forme de gouttière permettant de collecter directement une première portion du liquide amené à traverser le dispositif de distribution, les moyens d'obturation ayant chacun une première extrémité longitudinale ouverte (234) et une deuxième extrémité longitudinale fermée (334), de manière à forcer du liquide à sortir de la gouttière par la première extrémité longitudinale ouverte,
• au moins une ouverture étant ménagée latéralement dans une paroi délimitant la cheminée au voisinage d'une extrémité verticale de la cheminée et du moyen d'obturation qui bouche cette extrémité verticale
• la plaque inférieure (131) s'inscrivant principalement dans le premier plan et dans laquelle sont ménagés plusieurs orifices (132) par lesquels le liquide est apte à quitter le dispositif (130) de distribution,
• une pluralité de goulottes (136) configurées pour collecter directement une deuxième portion du liquide amené à traverser le dispositif de distribution, chaque goulotte (136) s'étendant principalement selon l'axe longitudinal (L) et étant délimitée transversalement par au moins une cheminée (133), au moins une partie des orifices (132) étant répartis dans le fond desdites goulottes (136), chaque goulotte ayant pour fond la plaque inférieure,
• le dispositif de distribution (130) étant configuré pour que la première portion du liquide quittant les gouttières formées par les moyens d'obturation se déverse dans les goulottes (136),
• au moins un canal périphérique supérieur (537, 538) ménagé entre les extrémités longitudinales (234, 334) de chaque moyen d'obturation (134) et un bord périphérique (230) du dispositif (130) de distribution, cet au moins un canal périphérique supérieur (537, 538) étant configuré pour d'une part collecter directement une troisième portion du liquide amené à traverser le dispositif de distribution et d'autre part permettre la circulation de la première portion de liquide en sortie des moyens d'obturation vers les goulottes, le canal périphérique supérieur étant localisé au-dessus de la plaque inférieure à un niveau intermédiaire de la hauteur des cheminées
**caractérisée en ce que** chaque goulotte comprend une première extrémité longitudinale ouverte (236) et une deuxième extrémité longitudinale fermée (336), la première extrémité longitudinale ouverte de chaque goulotte comprenant une paroi (436) dans laquelle est ménagée une rainure (536) par laquelle le liquide est apte à rejoindre la goulotte (136) concernée et **en ce que** cet au moins un canal périphérique supérieur (537, 538) constitue une plaque supérieure (137, 138) de forme substantiellement annulaire .

2. Colonne (1) selon la revendication précédente, dont le dispositif est agencé de sorte que la totalité du liquide passe par les goulottes (136) pour rejoindre la plaque inférieure (131) mais seule une portion de ce liquide, en l'espèce la deuxième portion, est directement collectée par ces goulottes, sans passer par les moyens d'obturation (134) agencés sur les cheminées (133).

3. Colonne (1) selon la revendication 1 ou 2, dans laquelle les moyens d'obturation (134) et l'au moins un canal périphérique supérieur (537, 538) s'étendent de sorte que, de préférence au niveau d'une plaque supérieure (137, 138), la surface globale d'extension des moyens d'obturation (134) cumulée à la surface globale d'extension de l'au moins un canal périphérique supérieur (537, 538) est supérieure à la surface globale d'extension des goulottes (136).

4. Colonne (1) selon la revendication 1 ou 2, dans laquelle les moyens d'obturation (134) et l'au moins un canal périphérique supérieur (537, 538) s'étendent de sorte que la surface globale d'extension des moyens d'obturation (134) cumulée à la surface globale d'extension de l'au moins un canal périphérique supérieur (537, 538) correspond à au moins 40% de la surface globale de la plaque inférieure (140).

5. Colonne (1) selon l'une quelconque des revendications précédentes, dans lequel une plaque supérieure comporte deux portions de plaques supérieure (137, 138) agencées de part et d'autre d'un axe transversal (T) dans le premier plan, chaque portion de plaque supérieure (137, 138) comprend une première partie transversale (237, 238) et une deuxième partie transversale (337, 338), la première partie transversale (237) de la première portion de plaque supérieure (137) étant agencée dans le prolongement de la première partie transversale (238) de la deuxième portion de plaque supérieure (138), et dans lequel un premier ensemble des extrémités longitudinales ouvertes (234) des moyens d'obturation (134) est agencé dans la première partie transversale (237, 238) de l'une des portions de plaque supérieure (137, 138) et un deuxième ensemble de ces extrémités longitudinales ouvertes (234) des moyens d'obturation (134) est agencé dans la deuxième partie transversale (337, 338) de l'autre portion de plaque supérieure (137, 138).

6. Colonne(1) selon l'une quelconque des revendications 1 à 3, dans laquelle une plaque supérieure comporte deux portions de plaque supérieure (137, 138) agencées de part et d'autre d'un axe transversal (T) dans le premier plan, chaque portion de plaque supérieure (137, 138) comprend une première partie d'extrémité transversale (237, 238), une partie centrale (437, 438) et une deuxième partie d'extrémité transversale (337, 338), la partie centrale (437, 438) de ladite portion de plaque supérieure (137, 138) étant agencée entre les deux parties d'extrémité transversale (237, 238, 337, 338) de cette portion de plaque supérieure (137, 138), la première partie d'extrémité transversale (237), la partie centrale (437) et la deuxième partie d'extrémité transversale (337) de la première portion de plaque supérieure (137) étant agencées dans le prolongement, respectivement, de la première partie d'extrémité transversale (238), de la partie centrale (438) et de la deuxième partie d'extrémité transversale (338) de la deuxième portion de plaque supérieure (138), et dans lequel l'ensemble des extrémités longitudinales ouvertes (234) des moyens d'obturation (134) débouchant dans une même portion de plaque supérieure (137, 138) est réparti dans l'une et l'autre des parties d'extrémité transversale (237, 337, 238, 338) de cette même portion de plaque supérieure (137, 138) et l'ensemble des extrémités longitudinales ouvertes (234) des moyens d'obturation (134) débouchant dans l'autre portion de plaque supérieure (137, 138) est agencé dans la partie centrale (437, 438) de cette autre portion de plaque supérieure (137, 138).

7. Colonne(1) selon l'une quelconque des revendications précédentes, dans laquelle au moins un organe de mélange (139) est agencé dans chaque goulotte (136).

8. Colonne (1) selon l'une des revendications précédentes, comprenant un premier organe de contact (120) agencé en amont du dispositif (130) de distribution selon l'invention, l'organe de contact agencé en aval de ce dispositif (130) de distribution selon le premier sens de circulation (S1) du liquide à travers la colonne (1) étant alors un deuxième organe de contact (140).

9. Colonne (1) selon la revendication précédente, dans laquelle au moins une poutre support (160) est positionnée sur au moins deux moyens d'obturation (134) des cheminées (133) du dispositif (130) de distribution, cette au moins une poutre support (160) étant configurée pour supporter le premier organe de contact (120) agencé en amont du dispositif (130) de distribution selon le premier sens de circulation (S1) du liquide à travers la colonne (1).

## Patentansprüche

1. Gas/Flüssigkeitstrennkolonne, umfassend eine Vorrichtung zur Verteilung von Flüssigkeit und ein Gas/Flüssigkeits-Kontaktorgan, die dafür geeignet ist, dass eine Flüssigkeit in einer ersten Flüssigkeitszirkulationsrichtung durch die Vorrichtung stromauf des Gas/Flüssigkeits-Kontaktorgans strömt, die Verteilungsvorrichtung umfassend
• eine Mehrzahl von Kaminen (133), die sich von einer unteren Platte (131) gemäß einer vertikalen Achse (V) senkrecht zu einer ersten Ebene erstrecken, wobei jeder Kamin (133) dazu ausgebildet ist, von dem Gas in einer zweiten Zirkulationsrichtung (S2) der ersten Richtung (S1) entgegengesetzt durchlaufen zu werden, wobei die Kamine oberhalb von Ausschnitten (235) in der unteren Platte angeordnet sind,
• eine Mehrzahl von Verschlussmitteln (134), die jeweils an einem oberen vertikalen Ende eines der Kamine (133) und über eine gesamte Längsabmessung des Kamins (133) angeordnet sind, wobei jedes Verschlussmittel (134) eine Form einer Rinne aufweist, die es gestattet, direkt einen ersten Anteil der Flüssigkeit zu sammeln, die dazu gebracht wird, die Verteilungsvorrichtung zu durchqueren, wobei die Verschlussmittel jeweils ein erstes, offenes Längsende (234) und ein zweites, geschlossenes Längsende (334) aufweisen, um Flüssigkeit zu zwingen, aus der Rinne durch das erste offene Längsende auszutreten,
• wobei wenigstens eine Öffnung seitlich in einer Wand, die den Kamin begrenzt, in der Nähe eines vertikalen Endes des Kamins und des Verschlussmittels, das dieses vertikale Ende verschließt, vorgesehen ist
• wobei die untere Platte (131) hauptsächlich in der ersten Ebene liegt und in welcher mehrere Auslässe (132) vorgesehen sind, durch welche die Flüssigkeit die Verteilungsvorrichtung (130) verlassen kann,
• eine Mehrzahl von Abläufen (136), die dazu ausgebildet sind, direkt einen zweiten Anteil der Flüssigkeit zu sammeln, die dazu gebracht wird, die Verteilungsvorrichtung zu durchqueren, wobei sich jeder Ablauf (136) hauptsächlich gemäß der Längsachse (L) erstreckt und in Querrichtung von wenigstens einem Kamin (133) begrenzt ist, wobei wenigstens ein Anteil der Auslässe (132) im Boden der Abläufe (136) verteilt sind, wobei jeder Ablauf die untere Platte als Boden aufweist,
• wobei die Verteilungsvorrichtung (130) dazu ausgebildet ist, dass sich der erste Anteil der Flüssigkeit, die die Rinnen verlässt, die von den Verschlussmitteln gebildet sind, in die Abläufe (136) ergießt,
• wenigstens einen oberen umlaufenden Kanal (537, 538), der zwischen den Längsenden (234, 334) jedes Verschlussmittels (134) und einem Umfangsrand (230) der Verteilungsvorrichtung (130) vorgesehen ist, wobei dieser wenigstens eine obere umlaufende Kanal (537, 538) dazu ausgebildet ist, einerseits direkt einen dritten Anteil der Flüssigkeit zu sammeln, die dazu gebracht wird, die Verteilungsvorrichtung zu durchqueren, und andererseits die Zirkulation des ersten Flüssigkeitsanteils am Ausgang der Verschlussmittel zu den Abläufen zu gestatten, wobei sich der obere umlaufende Kanal oberhalb der unteren Platte auf einem Zwischenniveau der Höhe der Kamine befindet
**dadurch gekennzeichnet, dass** jeder Ablauf ein erstes, offenes Längsende (236) und ein zweites, geschlossenes Längsende (336) umfasst, wobei das erste, offene Längsende jedes Ablaufs eine Wand (436) umfasst, in welcher eine Rille (536) vorgesehen ist, durch welche die Flüssigkeit zum entsprechenden Ablauf (136) gelangen kann und dadurch, dass dieser wenigstens eine obere umlaufende Kanal (537, 538) eine im Wesentlichen ringförmige obere Platte (137, 138) bildet.

2. Kolonne (1) nach dem vorhergehenden Anspruch, deren Vorrichtung so angeordnet ist, dass die gesamte Flüssigkeit die Abläufe (136) durchläuft, um zur unteren Platte (131) zu gelangen, jedoch nur ein Anteil dieser Flüssigkeit, in diesem Fall der zweite Anteil, direkt von diesen Abläufen gesammelt wird, ohne die Verschlussmittel (134) zu durchlaufen, die auf den Kaminen (133) angeordnet sind.

3. Kolonne (1) nach Anspruch 1 oder 2, wobei sich die Verschlussmittel (134) und der wenigstens eine obere umlaufende Kanal (537, 538) so erstrecken, dass vorzugsweise an einer oberen Platte (137, 138) die Gesamterstreckungsfläche der Verschlussmittel (134) mit der Gesamterstreckungsfläche des wenigstens einen oberen umlaufenden Kanals (537, 538) kumuliert größer als die Gesamterstreckungsfläche der Abläufe (136) ist.

4. Kolonne (1) nach Anspruch 1 oder 2, wobei sich die Verschlussmittel (134) und der wenigstens eine obere umlaufende Kanal (537, 538) so erstrecken, dass die Gesamterstreckungsfläche der Verschlussmittel (134) mit der Gesamterstreckungsfläche des wenigstens einen oberen umlaufenden Kanals (537, 538) kumuliert wenigstens 40 % der Gesamtfläche der unteren Platte (140) entspricht.

5. Kolonne (1) nach einem der vorhergehenden Ansprüche, wobei eine obere Platte zwei obere Plattenteilbereiche (137, 138) aufweist, die beiderseits einer Querachse (T) in der ersten Ebene angeordnet sind, wobei jeder obere Plattenteilbereich (137, 138) einen ersten Querabschnitt (237, 238) und einen zweiten Querabschnitt (337, 338) umfasst, wobei der erste Querabschnitt (237) des ersten oberen Plattenteilbereichs (137) in der Verlängerung des ersten Querabschnitts (238) des zweiten oberen Plattenteilbereichs (138) angeordnet ist, und wobei eine erste Menge der offenen Längsenden (234) der Verschlussmittel (134) im ersten Querabschnitt (237, 238) eines der oberen Plattenteilbereiche (137, 138) und eine zweite Menge dieser offenen Längsenden (234) der Verschlussmittel (134) im zweiten Querabschnitt (337, 338) des anderen oberen Plattenteilbereichs (137, 138) angeordnet ist.

6. Kolonne (1) nach einem der Ansprüche 1 bis 3, wobei eine obere Platte zwei obere Plattenteilbereiche (137, 138) aufweist, die beiderseits einer Querachse (T) in der ersten Ebene angeordnet sind, jeder obere Plattenteilbereich (137, 138) einen ersten Querendabschnitt (237, 238), einen Mittelabschnitt (437, 438) und einen zweiten Querendabschnitt (337, 338) umfasst, wobei der Mittelabschnitt (437, 438) des oberen Plattenteilbereichs (137, 138) zwischen den zwei Querendabschnitten (237, 238, 337, 338) dieses oberen Plattenteilbereichs (137, 138) angeordnet ist, der erste Querendabschnitt (237), der Mittelabschnitt (437) und der zweite Querendabschnitt (337) des ersten oberen Plattenteilbereichs (137) in der Verlängerung des ersten Querendabschnitts (238), des Mittelabschnitts (438) bzw. des zweiten Querendabschnitts (338) des zweiten oberen Plattenteilbereichs (138) angeordnet sind, und wobei die Menge der offenen Längsenden (234) der Verschlussmittel (134), die in einem selben oberen Plattenteilbereich (137, 138) münden, in dem einen und dem anderen der Querendabschnitte (237, 337, 238, 338) dieses selben oberen Plattenteilbereichs (137, 138) verteilt und die Menge der offenen Längsenden (234) der Verschlussmittel (134), die in dem anderen oberen Plattenteilbereich (137, 138) münden, im Mittelabschnitt (437, 438) dieses anderen oberen Plattenteilbereichs (137, 138) angeordnet ist.

7. Kolonne (1) nach einem der vorhergehenden Ansprüche, wobei wenigstens ein Mischorgan (139) in jedem Ablauf (136) angeordnet ist.

8. Kolonne (1) nach einem der vorhergehenden Ansprüche, umfassend ein erstes Kontaktorgan (120), das stromauf der erfindungsgemäßen Verteilungsvorrichtung (130) angeordnet ist, wobei das Kontaktorgan, das stromab dieser Verteilungsvorrichtung (130) gemäß der ersten Zirkulationsrichtung (S1) der Flüssigkeit durch die Kolonne (1) angeordnet ist, dann ein zweites Kontaktorgan (140) ist.

9. Kolonne (1) nach dem vorhergehenden Anspruch, wobei wenigstens ein Stützbalken (160) auf wenigstens zwei Verschlussmitteln (134) der Kamine (133) der Verteilungsvorrichtung (130) positioniert ist, wobei dieser wenigstens eine Stützbalken (160) dazu ausgebildet ist, das erste Kontaktorgan (120) zu stützen, das stromauf der Verteilungsvorrichtung (130) gemäß der ersten Zirkulationsrichtung (S1) der Flüssigkeit durch die Kolonne (1) angeordnet ist.

## Claims

1. Gas/liquid separation column, comprising a liquid dispensing device and a gas/liquid contact component, designed so that a fluid flows in a first liquid circulation direction through the device upstream of the gas/liquid contact component, the dispensing device comprising:
• a plurality of stacks (133) extending from a lower plate (131) along a vertical axis (V) perpendicular to a first plane, each stack (133) being configured to be followed by the gas in a second circulation direction (S2) opposite the first direction (S1), the stacks being disposed above cutouts (235) in the lower plate,
• a plurality of plugging means (134), respectively arranged at an upper vertical end of one of the stacks (133) and over the entire longitudinal dimension of said stack (133), each plugging means (134) having a gutter shape allowing direct collection of a first portion of the liquid that is conveyed through the dispensing device, the plugging means each having a first, open longitudinal end (234) and a second, closed longitudinal end (334), so as to force liquid to exit the gutter via the first, open longitudinal end;
• at least one opening being provided laterally in a wall demarcating the stack in the vicinity of a vertical end of the stack and of the plugging means plugging this vertical end
• the lower plate (131) mainly falling within the first plane and in which several orifices (132) are provided, through which the liquid is able to leave the dispensing device (130);
• a plurality of troughs (136) configured to directly collect a second portion of the liquid conveyed through the dispensing device, each trough (136) mainly extending along the longitudinal axis (L) and being transversely demarcated by at least one stack (133), at least one part of the orifices (132) being distributed in the base of said troughs (136), each trough having the lower plate for the base;
• the dispensing device (130) being configured so that the first portion of the liquid leaving the gutters formed by the plugging means pours into the troughs (136) ;
• at least one upper peripheral channel (537, 538) provided between the longitudinal ends (234, 334) of each plugging means (134) and a peripheral edge (230) of the dispensing device (130), said at least one upper peripheral channel (537, 538) being configured in order to, on the one hand, directly collect a third portion of the liquid conveyed through the dispensing device and, on the other hand, allow the circulation of the first portion of liquid exiting the plugging means towards the troughs, the upper peripheral channel being located above the lower plate at an intermediate level of the height of the stacks,
**characterized in that** each trough comprises a first, open longitudinal end (236) and a second, closed longitudinal end (336), the first, open longitudinal end of each trough comprising a wall (436), in which a groove (536) is provided, through which the liquid is able to meet the relevant trough (136), and **in that** said at least one upper peripheral channel (537, 538) forms an upper plate (137, 138) of substantially annular shape.

2. Column (1) according to the preceding claim, wherein the device is arranged so that all the liquid passes through the troughs (136) in order to meet the lower plate (131), but only one portion of this liquid, in this case the second portion, is directly collected by these troughs, without passing through the plugging means (134) arranged on the stacks (133).

3. Column (1) according to Claim 1 or 2, wherein the plugging means (134) and the at least one upper peripheral channel (537, 538) extend so that, preferably on an upper plate (137, 138), the overall extension surface of the plugging means (134) cumulated with the overall extension surface of the at least one upper peripheral channel (537, 538) is greater than the overall extension surface of the troughs (136).

4. Column (1) according to Claim 1 or 2, wherein the plugging means (134) and the at least one upper peripheral channel (537, 538) extend so that the overall extension surface of the plugging means (134) cumulated on the overall extension surface of the at least one upper peripheral channel (537, 538) corresponds to at least 40% of the overall surface of the lower plate (140).

5. Column (1) according to any one of the preceding claims, wherein an upper plate comprises two upper plate portions (137, 138) arranged on either side of a transverse axis (T) in the first plane, each upper plate portion (137, 138) comprises a first transverse part (237, 238) and a second transverse part (337, 338), the first transverse part (237) of the first upper plate portion (137) being arranged in the extension of the first transverse part (238) of the second upper plate portion (138), and wherein a first set of open longitudinal ends (234) of the plugging means (134) is arranged in the first transverse part (237, 238) of one of the upper plate portions (137, 138) and a second set of these open longitudinal ends (234) of the plugging means (134) is arranged in the second transverse part (337, 338) of the other upper plate portion (137, 138).

6. Column (1) according to any one of Claims 1 to 3, wherein an upper plate comprises two upper plate portions (137, 138) arranged on either side of a transverse axis (T) in the first plane, each upper plate portion (137, 138) comprises a first transverse end part (237, 238), a central part (437, 438) and a second transverse end part (337, 338), the central part (437, 438) of said upper plate portion (137, 138) being arranged between the two transverse end parts (237, 238, 337, 338) of this upper plate portion (137, 138), the first transverse end part (237), the central part (437) and the second transverse end part (337) of the first upper plate portion (137) being arranged in the extension, respectively, of the first transverse end part (238), of the central part (438) and of the second transverse end part (338) of the second upper plate portion (138), and wherein the set of open longitudinal ends (234) of the plugging means (134) emerging in the same upper plate portion (137, 138) is distributed in either one of the transverse end parts (237, 337, 238, 338) of said upper plate portion (137, 138) and the set of open longitudinal ends (234) of the plugging means (134) emerging in the other upper plate portion (137, 138) is arranged in the central part (437, 438) of this other upper plate portion (137, 138).

7. Column (1) according to any one of the preceding claims, wherein at least one mixing component (139) is arranged in each trough (136).

8. Column (1) according to one of the preceding claims, comprising a first contact component (120) arranged upstream of the dispensing device (130) according to the invention, the contact component arranged downstream of this dispensing device (130) in the first circulation direction (S1) of the liquid through the column (1) then being a second contact component (140).

9. Column (1) according to the preceding claim, wherein at least one support beam (160) is positioned on at least two means (134) of plugging the stacks (133) of the dispensing device (130), said at least one support beam (160) being configured to support the first contact component (120) arranged upstream of the dispensing device (130) in the first circulation direction (S1) of the liquid through the column (1).
